# EUROPÄISCHE PATENTSCHRIFT

(11) **EP 1 958 304 B1**
(45) Veröffentlichungstag und Bekanntmachung des Hinweises auf die Patenterteilung: **29.09.2010**
(21) Anmeldenummer: 07821959.9
(22) Anmeldetag: 29.10.2007
(51) Int. Cl.: H01T 1/12, H01T 1/14, H01H 83/10

(54) **STECKBARER ÜBERSPANNUNGSABLEITER**
PLUGGABLE SURGE ARRESTER
DISPOSITIF ENFICHABLE D'ÉVACUTATION DES SURTENSIONS

(30) Priorität: 05.12.2006 DE 102006057346; 29.01.2007 DE 102007004342; 29.01.2007 DE 202007006934 U
(43) Veröffentlichungstag der Anmeldung: 20.08.2008
(73) Patentinhaber: DEHN + SÖHNE GMBH + CO KG, 92318 Neumarkt/Opf (DE)
(72) Erfinder: ZÄUNER, Edmund, 92334 Berching/Pollanten (DE); KÖNIG, Raimund, 92369 Sengenthal (DE); LUDEWIG, Sascha, 92318 Neumarkt/Opf. (DE); DAUM, Richard, 92318 Neumarkt/Opf. (DE); GAECK, Florian, 92342 Freystadt (DE)
(74) Vertreter: Meissner, Bolte & Partner
(86) Internationale Anmeldenummer: PCT/EP2007/061599
(87) Internationale Veröffentlichungsnummer: WO 2008/068115

(56) Entgegenhaltungen:
- EP-A- 0 987 803
- WO-A-2006/045946

## Beschreibung

Die Erfindung betrifft einen steckbaren Überspannungsableiter mit einem Gehäuse zur Aufnahme des Ableiterelements, welches über leitende Verbinder an Steckkontakten, die den Gehäuseboden durchdringen, angeschlossen ist, wobei zwischen einem Anschluss des Ableiterelements und dem zugehörigen Verbinder eine thermische, unter Federvorspannung stehende Lot-Trennstelle ausgebildet ist, sowie mit einem auf die Lot-Trennstelle einwirkenden, die Vorspannkraft übertragenden Abtrennbock und einer Zustandsanzeige, gemäß Oberbegriff des Anspruchs 1.

Ein Überspannungsableiter, gemäß Oberbegriff des Anspruchs 1 ist aus EP-A-0 987 803 bekannt.

Für verschiedene Anforderungen und Netzkonfigurationen sind unterschiedliche Beschaltungsmaßnahmen im Hinblick der Anordnung von Überspannungsableitern notwendig, die Besonderheiten der jeweiligen Anwendung entsprechen müssen.

Im Niederspannungsnetz werden an verschiedenen Schnittstellen der Installation Blitzstrom- und Überspannungsableiter nach dem Blitzschutzzonenkonzept eingesetzt. Diese abgestimmten und koordinierten Einheiten beherrschen dann alle Arten der transienten Überspannungen bis hin zu den energiereicheren Beanspruchungen bei einer direkten Blitzentladung.

Durch eine auf die Netzkonfiguration abgestimmte Verschaltung der jeweiligen Überspannungsableiter mit den Außenleitern bzw. den spannungsführenden Leitungen mit dem Neutralleiter oder der örtlichen Erde ergibt sich ein auf die jeweilige Netzform abgestimmtes Schutzkonzept, das sowohl in Bezug auf die optimale Schutzwirkung als auch Fehlersicherheit ausgelegt ist. Einzelne Beschaltungen für Niederspannungsnetze sind in der DIN VDE 0100 Teil 534 erläutert.

Für die Beschaltung von TT-Systemen wird eine sogenannte 3+1-Schaltung eingesetzt, bei der die drei spannungsführenden Außenleiter gegen den Neutralleiter verschaltet sind, während zwischen dem Neutralleiter und der örtlichen Erde (PE/Schutzleitersystem) ein weiterer, sogenannter N/PE-Ableiter angeordnet ist.

Im Falle einer blitzbedingten Überspannung sprechen die Netzableiter und der N/PE-Ableiter an, so dass sich der daraus resultierende Blitzstrom auf die Ableitungen, die das System zur Verfügung stellt, aufteilt. In der Regel sind dies die Außenleiter gegen die örtliche Erde. Demzufolge verteilt sich der Blitzstrom in zu etwa gleichen Teilen auf die Außenleiter, während der gesamte Strom von den Außenleitern über den N/PE-Ableiter gegen die örtliche Erde abfließt. Dies bedeutet, dass der N/PE-Ableiter auf den Gesamtstrom und die Ableiter in den Außenleitern nur für die jeweiligen Teilströme auszulegen sind.

Aufgrund dieser vielfachen Belastungsfälle, die hauptsächlich den N/PE-Ableiter betreffen, ist es nicht auszuschließen, dass dieser Ableiter im durchgeschalteten Zustand, also dort, wo er seine Schutzfunktion ausübt, überlastet wird.

Eine beginnende Überlastung macht sich zunächst in Form einer Erwärmung bemerkbar. Hier befindet sich der Ableiter in einem Zustand, den er über eine gewisse Zeit ohne Folgeschäden übersteht. Wird diese Zeit überschritten bzw. erreicht die Temperatur Werte, von denen eine Brandgefahr ausgehen kann, wird vorgeschlagen, eine definierte Abschaltung vorzunehmen, und zwar insbesondere bei Innenraumanwendungen des Ableiters.

Als Folge einer starken Belastung kann der Ableiter mechanisch zerstört werden, da sich z.B. zunächst nur die stromführenden Teile innerhalb von Bruchteilen von Sekunden erwärmen. Hierbei kann es zu einem Durchglühen von Verbindungen kommen, wodurch letztendlich das Ableitergehäuse thermisch zerstört oder gar durch den entstehenden Lichtbogen zersprengt werden kann.

Um Folgefehler für die erläuterten Belastungsfälle auszuschließen, ist eine auf den Anwendungsfall bzw. das Zerstörungsverhalten des N/PE-Ableiters abgestimmte Schutzeinrichtung notwendig, die den stromführenden Teil des Ableiters bei Überlast abtrennt und eine sichere elektrische Trennung gegenüber den auftretenden Spannungen gewährleistet.

Beispielsweise kommen hier sogenannte thermische Abtrennvorrichtungen zum Einsatz, die im Regelfall eine Lotstelle umfassen. Beim Überschreiten der Schmelztemperatur des Lotes findet eine Öffnung der Kontaktverbindung statt.

Gemäß dem Stand der Technik werden derzeit Gasentladungsableiter bzw. Funkenstrecken als N/PE-Ableiter eingesetzt. Dies hat den Vorteil, dass für den normalen Betriebszustand im Vergleich zu Varistorableitern, wie sie auf der Seite der Außenleiter Anwendung finden, ein großer Isolationswiderstand erreicht werden kann.

Für Gasentladungsableiter sind eine Vielzahl von Lösungen bekannt, die einen Kurzschlussbügel aufweisen, der thermisch ausgelöst wird und den Ableiter überbrückt. Ein solcher Zustand ist im Fall eines N/PE-Ableiters im Niederspannungsnetz aus sicherheitstechnischen Gründen allerdings nicht erwünscht.

Aus dem Vorgenannten ist es Aufgabe der Erfindung, einen weiterenwickelten steckbaren Überspannungsableiter mit einem Gehäuse zur Aufnahme des Ableiterelements, welches über leitende Verbinder an Steckkontakten, die den Gehäuseboden durchdringen, angeschlossen ist, anzugeben, wobei der Ableiter sowohl bei gemäßigten als auch bei starken Überlastfällen eine wirksame und definierte Abschaltung gewährleistet.

Die Lösung der Aufgabe der Erfindung erfolgt gemäß der Merkmalskombination nach Anspruch 1, wobei die Unteransprüche mindestens zweckmäßige Ausgestaltungen und Weiterbildungen darstellen.

Erfindungsgemäß ist einer der leitenden Verbinder so ausgeführt, dass er eine Schaltzunge umfasst oder in eine solche Schaltzunge übergeht, deren Zungenende eine Lotkontaktstelle aufweist.

Die Schaltzunge ist darüber hinaus stromsensitiv, z.B. durch eine Sollbruchstelle, wobei diese Sollbruchstelle im Bereich der Vorspannkrafteinwirkung eines an sich bekannten Abtrennbocks ausgebildet ist.

Weiterhin ist erfindungsgemäß eine zwischen Lotkontaktstelle und dem Ableiterelement angeordnete elektrisch- und wärmeleitfähige Koppelplatte, welche einen Lotfortsatz aufweist.

Das Zungenende der Schaltzunge weist eine Querschnittsform auf, die geeignet ist, den Lotfortsatz in Abtrennrichtung teilweise zu umschließen, so dass nur eine definierte, recht geringe Lotmenge mit trotzdem sicherer Lotverbindung aufgenommen wird.

Der Lotfortsatz der Koppelplatte ist als Anschlussstift und das Zungenende als hierzu komplementäre Schale, Rinne oder Hohlkehle ausgebildet.

Am Abtrennbock ist erfindungsgemäß ein nasenförmiger Aufleger angeformt oder angeordnet, dessen freies Ende im Bereich der Sollbruchstelle der Schaltzunge mit dieser in mechanischem Kontakt steht.

Im Abtrennfall bewegt sich der nasenförmige Aufleger in die Trennstelle hinein und unterdrückt hierbei einen möglicherweise entstehenden Lichtbogen.

Der Abtrennbock wiederum ist verschwenkbar über eine Stiftlagerung im Gehäuse geführt.

Die Koppelplatte weist an ihrer dem Lotfortsatz gegenüberliegenden Seite eine Oberflächenkontur auf, die zur entsprechenden Kontaktfläche des Ableiterelements komplementär ist, so dass eine sichere, einfache mechanische und elektrische Verbindung zwischen diesen Teilen gewährleistet wird.

Über die Wahl der Geometrie und/oder des Materials der Koppelplatte lässt sich das thermische Ansprechverhalten der Trennstelle einstellen, d.h. es wird die Wärmestromdichte aus dem Inneren des Ableiterelements an die thermische Überwachungsstelle bzw. Lotstelle gezielt beeinflusst. Diese Beeinflussung ermöglicht je nach Einbausituation und Netzbedingungen sowie nach Leistungsfähigkeit des verwendeten Ableiterelements eine Gestaltung der Empfindlichkeit oder der Trägheit der Abtrennanordnung.

Mindestens der leitende Verbinder mit Schaltzunge ist aus einem einzigen Stanz-Prägeteil gefertigt. Dieses Stanz-Prägeteil weist auch den zugehörigen, den Gehäuseboden durchdringenden Steckkontakt auf.

Im Bereich der Schaltzunge kann ergänzend eine Spannfeder integriert werden, die aus einer Federspange oder einem Bimetall- oder einem Memorymetallstreifen besteht.

Der weitere leitende Verbinder wird bevorzugt ebenfalls als Stanz-Prägeteil mit Steckkontakt gefertigt, wobei dieser Verbinder einen großflächigen Kontaktbereich besitzt, welcher sich im Kraftschluss mit der entsprechenden Kontaktfläche des Ableiterelements befindet.

Der weitere leitende Verbinder besitzt federnde Eigenschaften und stützt sich gegen die Wandung des Gehäuses ab. Um einen gleichmäßigen Kontaktdruck bezogen auf das Ableiterelement zu gewährleisten, sind mindestens im Bereich des Gehäuses mit Abstützfunktion Verstärkungsrippen oder dergleichen konstruktive Ausbildungen vorgesehen.

Das Ableiterelement kann bevorzugt als Gasableiter mit gegenüberliegenden, strukturierten Kontaktflächen ausgebildet sein, wobei diese Kontaktflächen eine z.B. konkave Form aufweisen.

In diesem Fall ist die Koppelplatte an ihrer dem Lotfortsatz gegenüberliegenden Fläche konvex ausgebildet.

Der erfindungsgemäße Überspannungsableiter wird bevorzugt in einem Überspannungsschutzgerät für die Installation zwischen Neutralleiter und dem Erdleitungssystem einer Niederspannungsanlage verwendet, wobei das Grundprinzip der Erfindung auch auf andere Applikationen von Überspannungsableitern übertragbar ist.

Wie bereits dargelegt, besteht ein wesentliches Merkmal der Erfindung darin, eine Kombination einer Lot-Trennstelle als thermische Überwachung und einer Solltrennstelle mit angepassten Eigenschaften im Ableiterstoßstrompfad als zusätzliche Stromüberwachung bzw. Stromabschaltung auszuführen.

Die Lot-Trennstelle überwacht dabei die Wärme, die sich bei gemäßigter Überlast über die Kontakte auf die Anschlüsse überträgt, und schaltet die unter Vorspannung stehende Schaltzunge ab, sobald die Erwärmung das eingesetzte Lot zum Schmelzen gebracht hat.

Die Stromüberwachung hingegen berücksichtigt das besondere Verhalten des Ableiters bei Überlastung durch Stoßstrom. In diesem Fall wäre die Lotüberwachung viel zu träge und würde keine ausreichende Schutzfunktion bewirken. Durch eine entsprechend gestaltete Zuleitung, d.h. eine besondere Ausführung des Querschnitts und/oder Modellierung des Zuleiters, ähnlich einer Schmelzsicherung, ist gewährleistet, dass die Abtrennvorrichtung ausreichend flink und mit entsprechendem Ausschaltvermögen ausgestaltet werden kann.

Die kombinierte Abtrenneinheit ist kompakt aufgebaut und besteht aus einem einzigen Element, das sich aus Leitungszuführung, Solltrennstelle und Lot-Trennstelle bzw. Lotschalter zusammensetzt, wobei der Lotschalter direkt an dem zu überwachenden Bauteil, im vorliegenden Fall vorzugsweise einer Gasentladungs-Funkenstrecke befindlich ist.

Die Erfindung soll anhand eines Ausführungsbeispiels sowie unter Zuhilfenahme von Figuren näher erläutert werden.

Hierbei zeigen:
- Fig. 1: eine Ansicht des steckbaren Überspannungsableiters mit abge- nommener Schutzkappe und damit erkennbarem innerem Aufbau und
- Fig. 2: ein Detail gemäß Fig. 1 mit Schaltzunge, Lotkontaktstelle und Sollbruchstelle im Bereich der Vorspannkrafteinwirkung über einen nasenförmigen Aufleger des Abtrennbocks.

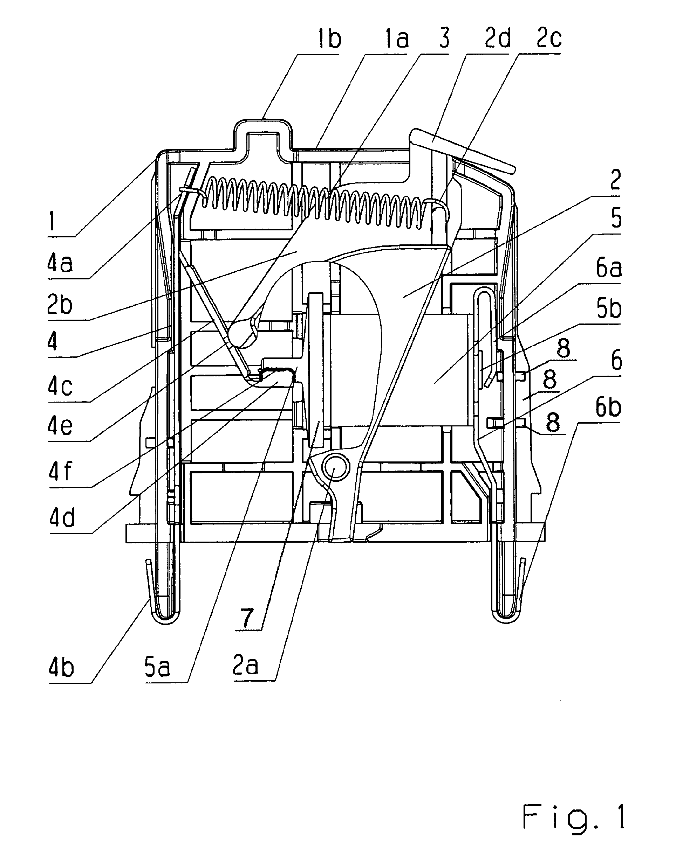

Gemäß der Darstellung nach Fig. 1 besteht der Überspannungsableiter aus einem Gehäuse 1. Am Gehäuse 1 ist eine Sichtfläche 1a für eine Zustandsanzeige vorhanden, wobei eine Ausformung 1b einen Anschlag für diese Zustandsanzeige darstellt.

Diese Zustandsanzeige 2d ist an einem Abtrennbock 2 ebenso angeformt, wie der Abtrennbock 2 einen nasenförmigen Aufleger 2b umfasst.

Die Gesamtanordnung, wie in der Fig. 1 dargestellt, wird unter Freilassung der Steckkontakte 4b und 6b von einer Kappe umgeben, die ein Sichtfenster entsprechend der Sichtfläche 1a besitzt.

Die Steckkontakte 4b und 6b dienen der Kontaktierung in einem Unterteil (nicht gezeigt), an dem die Leitungszuführung der äußeren Anschlüsse vorgenommen wird.

Diese beiden äußeren Steckkontakte 4b und 6b führen in das Innere des Gehäuses 1 und kontaktieren dort beidseitig das Ableiterelement 5.

Gemäß Ausführungsbeispiel werden beide Kontaktstücke / Verbinder 4 und 6 einstückig als Stanz-, Zieh- oder Prägeteil aus einem vorwiegend federnden und dennoch gut leitfähigen Material, z.B. Kupfer-Beryllium, gefertigt, an deren Enden bzw. Ausprägung jeweils Kontaktfedern die Steckkontakte 4b und 6b bilden. Weiterhin ist ein Kontaktbügel 6a an einem derartigen Verbinder vorhanden, der eine elektrische Verbindung zum Ableiterelement 5 an dessen Stirnseite herstellt.

Einer der Verbinder bzw. Kontaktstücke wird als kombinierte Abtrennvorrichtung ausgebildet. Dieser Verbinder besteht aus einer mittig ausgeprägten Schiene 4, deren Ausprägung 4c die Leitungszuführung zu dem Ableiterelement 5 und gleichzeitig eine Schaltzunge bildet.

Am Ende der Schaltzunge befindet sich eine Lotkontaktstelle 4d, die bei einer mäßigen Belastung des Ableiterelements 5 an dessen Kontakt 5a durch Wärmeübertragung aufschmilzt und mit einer Schaltbewegung der Schaltzunge 4c die beabstandete Abschaltung bewirkt.

Die Schaltbewegung der Schaltzunge 4c resultiert aus einer Federvorspannung, die indirekt über den Abtrennbock 2 eine Vorspannung auf die Ausprägung bzw. die Schaltzunge 4c und damit auf die Lotkontaktstelle 4d ausübt.

Durch die Drehbewegung des Abtrennbocks 2 führt die abgetrennte Schaltzunge 4c eine entsprechend schnelle Schaltbewegung über einen großen Öffnungsweg aus und stellt damit eine sichere Trennung zwischen dem Ableiterelement 5 und der durch die Schaltzunge 4c gebildeten Leitungszuführung her.

Gleichzeitig wird die vom Abtrennbock 2 ausgeführte Drehbewegung in ihrer Endstellung 1b in dem Sichtfenster 1a angezeigt, so dass nach außen hin diese Schaltstellung des Abtrennbocks 2 anhand seiner Anzeigefläche 2d als Auslösezustand erkennbar ist. Das Ende der Feder 4 ist zum einen im Festpunkt 4a des Verbinders und zum anderen im Festpunkt 2c am Abtrennbock 2 befestigt.

Für die Unterbrechung des Stromkreises bei starker Überlastung wirkt die durch Ausprägung gebildete Schaltzunge 4c, indem sich die dazu erforderliche stromsensitive Solltrennstelle 4e in dem durch sie gebildeten Leitungszug befindet. Der hier dann stattfindende Mechanismus der Schaltbewegung ist der gleiche wie im Fall der Lotabtrennung, so dass auch hier die optische Zustandserkennung wirksam ist. Die Trennstelle / Sollbruchstelle 4e befindet sich im unteren Drittel und nicht unmittelbar am Ende der Schaltzunge 4c.

Bei Abtrennbewegung schiebt sich der Abtrennbock 2 durch seine als Folge der Abtrennung ausgeführte Drehbewegung zwischen die Trennstelle, so dass ein eventuell entstehender Schaltlichtbogen sofort nach seiner Entstehung wirksam unterbrochen wird. Dies ist möglich, da der Abtrennbock 2 mit seinem angeformten nasenförmigen Aufleger 2b direkt über der stromsensitiven Sollbruchstelle 4e positioniert ist, auf diese drückt und sich bei deren Auftrennung in den Zwischenraum hinein bewegt.

Wie bereits erläutert, wird die Vorspannung für die Schaltzunge 4c durch eine Feder 3 erzeugt, die ihren einen Festpunkt am oberen Ende des Kontaktstücks 4a hat. Der von der Feder erzeugte Zug wirkt dann auf den Abtrennbock 2 am Angriffspunkt 2c, der wiederum auf das Drehlager 2a des Abtrennbocks 2 wirkt und die gewünschte Drehbewegung ermöglicht.

Die Federvorspannkraft greift also über den Abtrennbock 2 auf die Schaltzunge 4c und damit auf die Lotkontaktstelle 4d einerseits und die stromsensitive Sollbruchstelle 4e andererseits an. Eine zusätzliche Unterstützung dieser Vorspannung ist dadurch möglich, dass in die Ausprägung eine Spannfeder integriert ist, die z.B. aus einer Federspange oder vorzugsweise aus einem Bimetall- oder Memorymetallstreifen bestehen kann. Diese Metalle oder Metallkombinationen werden so ausgewählt, dass mindestens zwei stabile, temperaturabhängige Stellungen oder Formungen angenommen werden können. Dieser Effekt wird erfindungsgemäß derart genutzt, dass die Schaltzunge mit zunehmender Temperatur einen zunehmenden Druck in Schaltrichtung erfährt und somit zuzüglich zur Federkraft eine Vorspannungserhöhung stattfindet, was den Schaltvorgang und die Schaltgeschwindigkeit positiv beeinflusst. Diese Kombination zur Erzeugung der Vorspannung erhöht zusätzlich die Zuverlässigkeit der Auslösung eines Schaltvorgangs, so dass eine Redundanz oder Notlaufeigenschaft für den Fall vorhanden ist, dass eines der erwähnten Systeme versagt oder nur eingeschränkt wirkt.

Die Lotkontaktstelle, die die Schaltzunge 4c mit dem Ableiterelement 5 verbindet, ist so ausgelegt und eingestellt, dass die Abtrennung sicher und zu einem Zeitpunkt erfolgt, bei dem noch keine thermischen Schäden durch ein überhitztes Ableiterelement 5 abzusehen oder gegeben sind.
Dieser Punkt wird durch die Wahl des Lotes bestimmt, wobei auch die beschriebene mechanische Vorspannung einen wesentlichen Anteil liefert. Weiterhin ist die Lotmenge an der Lotstelle 4f und die Wärmeverteilung an der Lotkontaktstelle optimiert.

Die Lotkontaktstelle 4d ist so ausgeformt, dass selbige nur eine begrenzte Menge Lot aufnimmt. Hierfür ist das Ende der Schaltzunge 4c schmal und halbkehlig ausgebildet. Um eine optimale Wärmeverteilung zu erreichen, werden nur hoch wärmeleitfähige Metalle oder Metalllegierungen bzw. Überzüge mindestens im Bereich der Lotkontaktstelle verwendet.

Der weitere Verbinder bzw. das weitere Kontaktstück 6 ist so ausgeformt, dass es über Abstützungen 8 im Gehäuse oder Gehäusehalbteil 1, welches für die Aufnahme der Bauteile vorgesehen ist, einen Kontaktdruck über den Bügel 6a auf die Kontaktfläche 5b des Ableiterelements 5 ausübt. Diese Abstützungen 8 bestehen z.B. aus Stegen, die gleichzeitig die Festigkeit des Gehäusehalbteils 1 erhöhen, so dass ein kontinuierlicher Kontaktdruck auch durch eine entsprechende Steifigkeit des Gehäuses gewährleistet ist.

Durch die Abstützungen oder Stege 8 im tragenden Gehäusehalbteil 1 werden die beiden Kontaktstücke oder Verbinder 4, 6 geführt und in ihrer Lage gehalten. Gleichzeitig wirken innere Stege oder Ausformungen in bestimmten Bereichen als Isolation für die Kontaktstücke.

Die erfindungswesentliche Koppelplatte 7 ermöglicht durch ihre Materialwahl und geometrische Gestaltung, die Wärmestromdichte aus dem Inneren der Funkenstrecke / GDT an die thermische Überwachungsstelle (Lotkontaktstelle) gezielt zu beeinflussen.

Diese Beeinflussung ermöglicht je nach Einbausituation und Netzbedingungen sowie nach Leistungsfähigkeit der verwendeten Funkenstrecke / GDT eine Einstellung der Empfindlichkeit, d.h. des Ansprechverhaltens der Abtrennanordnung.

So ist es prinzipiell möglich, durch ein schlecht wärmeleitfähiges Material, z.B. Eisen oder eine ungünstige geometrische Gestaltung in Form eines langgestreckten Leiters mit kleinem Querschnitt, eine relativ unempfindliche thermische Abtrennvorrichtung auszuführen. Diese Maßnahme führt dazu, dass im erläuterten Fall die Wärmestromdichte reduziert und damit die Zeit zum Erreichen der Schmelztemperatur an der Lotkontaktstelle vergrößert wird.

Im gegenteiligen Fall ist es möglich, durch Verwendung eines sehr gut leitfähigen Materials für die Koppelplatte 7 sowie durch entsprechende geometrische Gestaltung mit großem Querschnitt und kurzen Längen die Wärmestromdichte zu erhöhen mit der Folge, dass die Abtrennvorrichtung schneller anspricht.

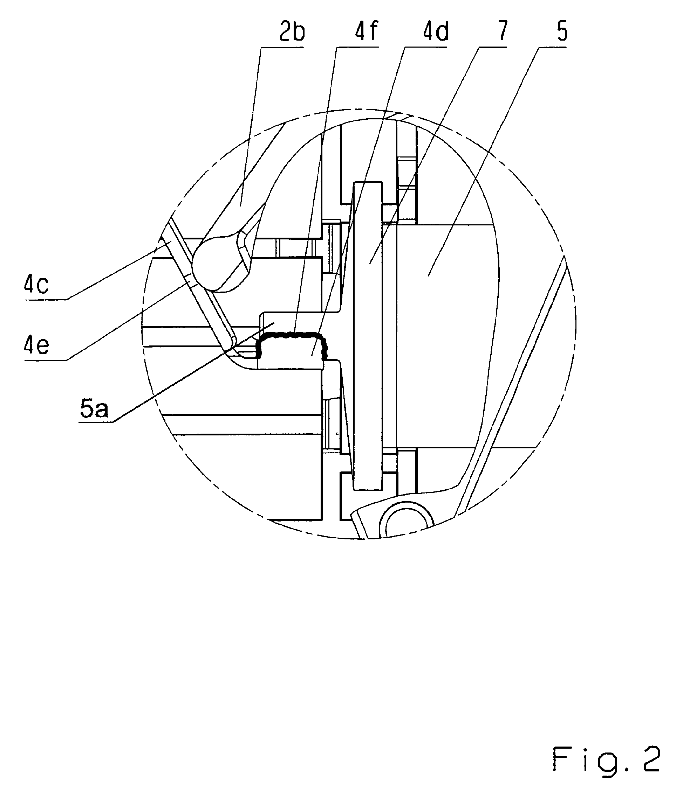

Fig. 2 zeigt den thermo-/stromsensitiven Bereich der Schaltzunge 4c. Hier ist auch das Hohlkehlprofil, aus dem die Schaltzunge 4c gebildet ist, erkennbar.

In dem Bereich, in dem der nasenförmige Aufleger 2b des Abtrennbocks 2 auf der Schaltzunge 4c aufliegt, ist eine Bohrung als stromsensitive Sollbruchstelle 4e ausgebildet.

Diese Bohrung spart den Boden des hohlkehligen Profils aus, während die Seitenteile oder Schenkel dieses Profils zumindest größtenteils erhalten bleiben. Hierdurch entsteht eine Verengung des Querschnitts, die bereits in der Erwärmungsphase unter dem Einfluss der Vorspannung des Abtrennbocks einknickt und somit sowohl die Auftrennung als auch die Lichtbogenlöschung durch den Abtrennbock 2 begünstigt.

Das auslaufende Ende der Schaltzunge 4c besteht aus einem hohlkehligen Endstück 4d (Lotkontaktstelle), das den nach außen geführten Lotfortsatz 5a in Form eines Anschlussstifts in Abtrennrichtung formschlüssig so umgibt, dass die Schaltbewegung der Schaltzunge 4c bei Aufschmelzen des Lotes in Richtung der Vorspannung des Abtrennbocks 2 erfolgt.

Diese Teile bilden den thermosensitiven Bereich der Abtrennvorrichtung, d.h. denjenigen, der auf die Erwärmung des Ableiters 5 reagiert.

Das Endstück 4d ist unter Nutzung eines Schmelzlots 4f mit dem Lotfortsatz verlötet, wobei die Lotmenge auf dem Lotfortsatz 5a begrenzt ist.

Erfolgt infolge einer Strombelastung des Ableiters 5 eine Erwärmung der Koppelplatte 7 mit Lotfortsatz 5a, erfährt aufgrund der geringeren Masse der umgelenkte Bereich der Schaltzunge 4c nahezu die gleiche Erwärmung wie die Lotkontaktstelle selbst. Dadurch wird das flüssige Schmelzlot zusätzlich von der Lotkontaktstelle durch Kapillarwirkung abgesaugt, so dass eine schlagartige Auslösung der Schaltzunge 4c ohne Ausbildung von Schmelzlotbrücken gewährleistet ist.

## Patentansprüche

1. Steckbarer Überspannungsableiter mit einem Gehäuse (1) zur Aufnahme des Ableiterelements (5), welches über leitende Verbinder(4; 6) an Steckkontakten (4b; 6b), die den Gehäuseboden durchdringen, angeschlossen ist, wobei zwischen einem Anschluss des Ableiterelements (5) und dem zugehörigen Verbinder (4; 6) eine thermische, unter Federvorspannung stehende Lot-Trennstelle (4e) ausgebildet ist, sowie mit einem auf die Lot-Trennstelle (4e) einwirkenden, die Vorspannkraft übertragenden Abtrennbock (2) und einer Zustandsanzeige (2d),
**dadurch gekennzeichnet, dass**
einer der leitenden Verbinder (4) eine Schaltzunge (4c) umfasst, deren Zungenende in eine Lotkontaktstelle (4d) übergeht und die Schaltzunge (4c) eine stromsensitive Solltrennstelle (4e) aufweist oder stromsensitive Eigenschaften besitzt, wobei diese Solltrennstelle oder Stromsensitivität (4e) mindestens im Bereich der Vorspannkrafteinwirkung ausgebildet oder vorhanden ist.

2. Ableiter nach Anspruch 1,
**dadurch gekennzeichnet, dass**
eine zwischen Lotkontaktstelle (4d) und dem Ableiterelement (5) angeordnete, elektrisch- und wärmeleitfähige Koppelplatte (7) vorgesehen ist, welche einen Lotfortsatz (5a) aufweist.

3. Ableiter nach Anspruch 2,
**dadurch gekennzeichnet, dass**
das Zungenende (4c) eine Querschnittsform aufweist, die geeignet ist, den Lotfortsatz (5a) in Abtrennrichtung teilweise zu umschließen.

4. Ableiter nach Anspruch 2 oder 3,
**dadurch gekennzeichnet, dass**
der Lotfortsatz (5a) als Anschlussstift und das Zungenende (4c) als Schale, Rinne oder Hohlkehle ausgebildet ist.

5. Ableiter nach einem der vorangegangenen Ansprüche,
**dadurch gekennzeichnet, dass**
am Abtrennbock (2) ein nasenförmiger Aufleger (2b) angeformt oder angeordnet ist, dessen freies Ende im Bereich der Sollbruchstelle (4e) der Schaltzunge (4c) mit dieser in mechanischem Kontakt steht.

6. Ableiter nach Anspruch 5,
**dadurch gekennzeichnet, dass**
im Abtrennfall der nasenförmige Aufleger (2b) sich in die Trennstelle (4e) hinein bewegt und einen möglichen Lichtbogen unterdrückt.

7. Ableiter nach einem der vorangegangenen Ansprüche,
**dadurch gekennzeichnet, dass**
der Abtrennbock(2) verschwenkbar im Gehäuse gelagert ist.

8. Ableiter nach einem der Ansprüche 2 bis 7,
**dadurch gekennzeichnet, dass**
die Koppelplatte (7) an ihrer dem Lotfortsatz (5a) gegenüberliegenden Seite eine Oberflächenkontur aufweist, die zur entsprechenden Kontaktfläche des Ableiterelements (5) komplementär ist.

9. Ableiter nach Anspruch 2 oder 8,
**dadurch gekennzeichnet, dass**
über die Wahl der Geometrie und/oder des Materials der Koppelplatte (7) das thermische Ansprechverhalten der Lot-Trennstelle (4e) einstellbar ist.

10. Ableiter nach einem der vorangegangenen Ansprüche,
**dadurch gekennzeichnet, dass**
mindestens der leitende Verbinder (4) mit Schaltzunge (4c) aus einem einzigen Stanz-Prägeteil besteht.

11. Ableiter nach Anspruch 10,
**dadurch gekennzeichnet, dass**
das Stanz-Prägeteil den zugehörigen Steckkontakt (4b) umfasst.

12. Ableiter nach einem der Ansprüche 1 bis 11,
**dadurch gekennzeichnet, dass**
im Bereich der Schaltzunge (4c) eine Spannfeder integriert ist, die aus einer Federspange oder aus einem Bimetall- oder Memorymetallstreifen besteht.

13. Ableiter nach einem der vorangegangenen Ansprüche,
**dadurch gekennzeichnet, dass**
der weitere leitende Verbinder(6) aus einem Stanz-Prägeteil mit Steckkontakt (6b) besteht, wobei dieser Verbinder (6) einen großflächigen Kontaktbereich besitzt, welcher sich im Kraftschluss mit der entsprechenden Kontaktfläche des Ableiterelement (5) befindet.

14. Ableiter nach Anspruch 13,
**dadurch gekennzeichnet, dass**
der weitere leitende Verbinder (6) federnde Eigenschaften aufweist und sich gegen die Wandung des Gehäuses (1) abstützt.

15. Ableiter nach Anspruch 14,
**dadurch gekennzeichnet, dass**
mindestens im Bereich des Gehäuses (1) mit Abstützfunktion Verstärkungsrippen (8) vorgesehen sind.

16. Ableiter nach einem der vorangegangenen Ansprüche,
**dadurch gekennzeichnet, dass**
das Ableiterelement (5) ein Gasableiter mit gegenüberliegenden, strukturierten Kontaktflächen ist.

17. Ableiter nach Anspruch 16,
**dadurch gekennzeichnet, dass**
die Kontaktflächen (5b) eine konkave Form aufweisen.

18. Ableiter nach Anspruch 2 oder 17,
**dadurch gekennzeichnet, dass**
die Koppelplatte (7) an ihrer dem Lotfortsatz gegenüberliegenden Fläche konvex ausgebildet ist.

## Claims

1. Pluggable surge arrester comprising a housing (1) for accommodating the arrester element (5), which is connected via conductive connectors (4; 6) to plug contacts (4b; 6b), which pass through the housing base, wherein a thermal solder separation point (4e), which is subjected to a spring preload, is formed between a connection of the arrester element (5) and the associated connector (4; 6), and comprising a separating component (2), which acts on the solder separation point (4e) and transmits the preload force, and a status indicator (2d),
**characterized in that**
one of the conductive connectors (4) comprises a switching tongue (4c), whose tongue end merges with a solder contact point (4d), and the switching tongue (4c) has a current-sensitive predetermined separation point (4e) or has current-sensitive properties, wherein this predetermined separation point or current sensitivity (4e) is formed or present at least in the region of the action of the preload force.

2. Arrester according to claim 1,
**characterized in that**
an electrically and thermally conductive coupling plate (7) is provided, which is arranged between the solder contact point (4d) and the arrester element (5) and which comprises a solder extension (5a).

3. Arrester according to claim 2,
**characterized in that**
the tongue end (4c) has a cross-sectional shape, which is suited to partially encompass the solder extension (5a) in the direction of separation.

4. Arrester according to claim 2 or 3,
**characterized in that**
the solder extension (5a) is formed as a connecting pin and the tongue end (4c) is formed as a shell, flute or channel.

5. Arrester according to one of the preceding claims,
**characterized in that**
a nose-shaped prolongation (2b) is formed or arranged on the separating component (2), whose free end is in mechanical contact with the switching tongue (4c) in the region of the predetermined breaking point (4e) thereof.

6. Arrester according to claim 5,
**characterized in that**
in the case of a separation the nose-shaped prolongation (2b) moves into the separation point (4e) and suppresses a possible arc.

7. Arrester according to one of the preceding claims,
**characterized in that**
the separating component (2) is mounted pivotably in the housing.

8. Arrester according to one of claims 2 to 7,
**characterized in that**
the coupling plate (7) has a surface structure on its side opposite the solder extension (5a) which is complementary with respect to the corresponding contact surface of the arrester element (5).

9. Arrester according to claim 2 or 8,
**characterized in that**
the thermal response characteristic of the solder separation point (4e) can be adjusted by the choice of the geometry and/or the material of the coupling plate (7).

10. Arrester according to one of the preceding claims,
**characterized in that**
at least the conductive connector (4) with the switching tongue (4c) is made of one single punched/stamped part.

11. Arrester according to claim 10,
**characterized in that**
the punched/stamped part comprises the associated plug contact (4b).

12. Arrester according to one of claims 1 to 11,
**characterized in that**
a tension spring is integrated in the region of the switching tongue (4c), which is made of a spring clip or a bimetallic strip or a memory metal strip.

13. Arrester according to one of the preceding claims,
**characterized in that**
the further conducting connector (6) is made of a punched/stamped part with a plug contact (6b), wherein this connector (6) has a large-surface contact area which is in frictional connection with the corresponding contact surface of the arrester element (5).

14. Arrester according to claim 13,
**characterized in that**
the further conducting connector (6) has resilient properties and is supported against the wall of the housing (1).

15. Arrester according to claim 14,
**characterized in that**
reinforcing ribs (8) are provided at least in the region of the housing (1) having a supporting function.

16. Arrester according to one of the preceding claims,
**characterized in that**
the arrester element (5) is a gas arrester with opposite, structured contact surfaces.

17. Arrester according to claim 16,
**characterized in that**
the contact surfaces (5b) have a concave shape.

18. Arrester according to claim 2 or 17,
**characterized in that**
the coupling plate (7) is convex on its surface opposite the solder extension.

## Revendications

1. Dérivateur de surtensions enfichable, comprenant un boîtier (1) pour recevoir l'élément dérivateur (5), lequel est raccordé via des éléments de liaison conducteurs (4 ; 6) à des contacts à enfichage (4b ; 6b) qui traversent le fond du boîtier, dans lequel un emplacement de séparation thermique (4e) à brasure soumis à la précontrainte d'un ressort est réalisé entre une borne de l'élément dérivateur (5) et l'élément de liaison (4 ; 6) associé, et comprenant un bloc de séparation (2) qui agit sur l'emplacement de séparation (4e) à brasure et transmet la force de précontrainte, et un indicateur d'état (2d),
**caractérisé en ce que**
l'un des éléments de liaison conducteurs (4) comprend une languette de commutation (4c), dont l'extrémité se transforme en un emplacement de contact à brasure (4d), et la languette de commutation (4c) comporte un emplacement de séparation de consigne (4e) sensible vis-à-vis du courant ou possède des propriétés sensibles vis-à-vis du courant, ledit emplacement de séparation de consigne ou ladite sensibilité vis-à-vis du courant étant réalisé(e) ou présent(e) au moins dans la région d'action de la force de précontrainte.

2. Dérivateur selon la revendication 1,
**caractérisé en ce qu'**il est prévu une plaque d'accouplement (7) conductrice de l'électricité et de la chaleur, agencé entre l'emplacement de contact à brasure (4d) et l'élément dérivateur (5), laquelle comprend un prolongement en brasure (5a).

3. Dérivateur selon la revendication 2,
**caractérisé en ce que** l'extrémité (4c) de la languette présente une forme de section transversale qui convient à entourer partiellement le prolongement en brasure (5a) dans la direction de séparation.

4. Dérivateur selon la revendication 2 ou 3,
**caractérisé en ce que** le prolongement en brasure (5a) est réalisé sous la forme d'une tige de raccordement, et l'extrémité de la languette (4c) est réalisée sous forme de coupelle, de goulotte ou d'étranglement.

5. Dérivateur selon l'une des revendications précédentes,
**caractérisé en ce qu'**un palpeur (2b) en forme de bec est conformé sur le bloc de séparation (2) ou agencé sur celui-ci, dont l'extrémité libre est en contact mécanique avec la languette de commutation (4c) dans la région de l'emplacement de rupture de consigne (4e) de celle-ci.

6. Dérivateur selon la revendication 5,
**caractérisé en ce que,** dans le cas de séparation, le palpeur (2b) en forme de bec se déplace en entrant dans l'emplacement de séparation (4e) et inhibe un arc électrique éventuel.

7. Dérivateur selon l'une des revendications précédentes,
**caractérisé en ce que** le bloc de séparation (2) est monté avec possibilité de pivotement dans le boîtier.

8. Dérivateur selon l'une des revendications 2 à 7,
**caractérisé en ce que** la plaque d'accouplement (7) comporte, sur son côté opposé au prolongement en brasure (5a), un contour de surface qui est complémentaire de la surface de contact correspondante de l'élément dérivateur (5)

9. Dérivateur selon la revendication 2 ou 8,
**caractérisé en ce que** le comportement de réaction thermique de l'emplacement de séparation en brasure (4e) est réglable au moyen du choix de la géométrie et/ou du matériau de la plaque d'accouplement (7).

10. Dérivateur selon l'une des revendications précédentes,
**caractérisé en ce qu'**au moins l'élément de liaison conducteur (4) avec la languette de commutation (4c) est constitué d'une unique pièce estampée/poinçonnée.

11. Dérivateur selon la revendication 10,
**caractérisé en ce que** la pièce estampée/poinçonnée comprend le contact à enfichage (4b) associé.

12. Dérivateur selon l'une des revendications 1 à 11,
**caractérisé en ce que,** dans la région de la languette de commutation (4c) est intégré un ressort de tensionnement, qui est constitué par une pince à ressort ou par une bande de type bilame ou une bande en métal à mémoire.

13. Dérivateur selon l'une des revendications précédentes,
**caractérisé en ce que** l'autre élément de liaison conducteur (6) est une pièce estampée/poinçonnée avec contact à enfichage (6b), ledit élément de liaison (6) possédant une plage de contact à grande surface, qui se trouve en coopération de forces avec la surface de contact correspondante de l'élément dérivateur (5).

14. Dérivateur selon la revendication 13,
**caractérisé en ce que** l'autre élément de liaison conducteur (6) présente des propriétés élastiques et s'appuie contre la paroi du boîtier (1).

15. Dérivateur selon la revendication 14,
**caractérisé en ce que** des nervures de renforcement (8) sont prévues au moins dans la région du boîtier (1) qui remplit une fonction de soutien.

16. Dérivateur selon l'une des revendications précédentes,
**caractérisé en ce que** l'élément dérivateur (5) est un dérivateur à gaz avec des surfaces de contact structurées opposées.

17. Dérivateur selon la revendication 16,
**caractérisé en ce que** les surfaces de contact (5b) présentent une forme concave.

18. Dérivateur selon la revendication 2 ou 17,
**caractérisé en ce que** la plaque d'accouplement (7) est réalisée de manière convexe sur sa surface opposée au prolongement en brasure.
